(19) Europäisches Patentamt
European Patent Office
Office européen des brevets

(11) Publication number: **0 105 090**
**B1**

(12) # EUROPEAN PATENT SPECIFICATION

(45) Date of publication of patent specification: **16.04.86**

(51) Int. Cl.$^4$: **C 08 L 69/00**

(21) Application number: **83106062.9**

(22) Date of filing: **21.06.83**

(54) **Polycarbonate composition.**

(30) Priority: **14.07.82 NL 8202845**

(43) Date of publication of application:
**11.04.84 Bulletin 84/15**

(45) Publication of the grant of the patent:
**16.04.86 Bulletin 86/16**

(84) Designated Contracting States:
**DE FR GB IT NL**

(56) References cited:
**EP-A-0 032 379**
**EP-A-0 053 825**
**NL-A-7 210 855**

**CHEMICAL ABSTRACTS, vol. 72, no. 6, 9th February 1970, page 26, no. 22218r, Columbus, Ohio, USA V.N. KOTRELEV et al.: "Stabilization of polycarbonate during a reworking process"**

(73) Proprietor: **GENERAL ELECTRIC COMPANY**
**1 River Road**
**Schenectady New York 12305 (US)**

(72) Inventor: **Bussink, Jan**
**GENERAL ELECTRIC PLASTICS B.V. P.O. Box 117**
**NL-4600 AC Bergen op Zoom (NL)**
Inventor: **Van Abeelen, Petrus Cornelus**
**GENERAL ELECTRIC PLASTICS B.V. P.O. Box 117**
**NL-4600 AC Bergen op Zoom (NL)**
Inventor: **Sederel, Willem Lodewijk**
**GENERAL ELECTRIC PLASTICS B.V. P.O. Box 117**
**NL-4600 AC Bergen op Zoom (NL)**
Inventor: **Starr, J.**
**GENERAL ELECTRIC PLASTICS B.V. P.O. Box 117**
**NL-4600 AC Bergen op Zoom (NL)**

(74) Representative: **Grever, Frederik et al**
**General Electric Plastics B.V. P.O. Box 117**
**NL-4600 AC Bergen op Zoom (NL)**

**EP 0 105 090 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a polycarbonate composition with permanent conductivity.

For certain applications, such as capacitance video discs and permanent anti-static products, the polycarbonate compounds must exhibit a permanent conductivity. Permanent anti-static products require a surface resistivity of max. $10^9$ Ohm per square whereas the volume resistivity can vary over a wide range, normally $10^8$—$10^{16}$ Ohm cm. For conductive plastics the volume resistivity must be below $10^5$ Ohm cm, preferably in the range of 1—1000 Ohm cm. VHD video discs require a volume resistivity in the range of 1—5 Ohm cm or a surface resistivity in the order of 10—100 Ohm per square.

Polycarbonate compositions with permanent conductivity are obtained by incorporating carbon black therein. Incorporating carbon black in polycarbonate compositions results in a considerable degradation of the polycarbonate upon processing the compositions, for example by extrusion, when the carbon black is present in quantities of 2% or more. As a result of said degradation the mechanical integrity of the polycarbonate composition is lost so that the mass is no longer suitable for application.

It is the object of the invention to provide a polycarbonate composition with permanent conductivity which upon being processed does not degrade or is only slightly degraded. The polycarbonate composition according to the invention is characterized in that the polycarbonate composition comprises 2—30 weight percent of carbon black (a), 0.3—3 weight percent of phosphite stabilizer of formula 1a

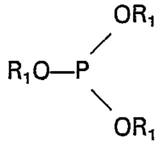

in which the groups $R_1$, which may be the same or different, each represent hydrogen, an alkyl group, an aryl group or alkaryl group or two of the groups $R_1$, together, represent a ring structure, preferably of formula 1b

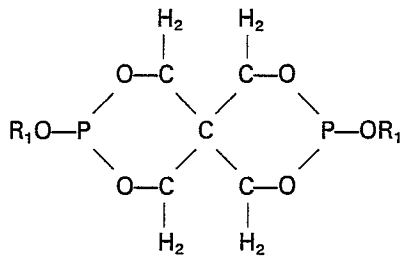

1b

in which $R_1$, has the above giving meanings (b) and 67—97.7 weight percent of an aromatic polycarbonate (c), each of the quantities of a, b and c calculated as the weight percent of the total of a+b+c.

Incorporating carbon black results in an increase of the viscosity and hence in a decrease of the processability of the polycarbonate composition. The flow capacity of carbon black-containing polycarbonate compositions can be improved by incorporating a plasticizer (d) therein. Since the dispersion of the carbon black in the polycarbonate composition is improved by the plasticizer, the incorporation of a plasticizer also results in an improvement of the action of the carbon black, i.e., of the conductivity of the polycarbonate composition.

The plasticizer (d) can be incorporated in the polycarbonate compositions in a quantity of about 0.5—20 weight percent of a+b+c. Weight percent d is calculated as $d/a+b+c \times 100$.

The compositions according to the invention may further comprise a polysiloxane.

The aromatic polycarbonate resins which are used in the compositions according to the invention are homopolymers and copolymers which are prepared by reaction of a dihydric phenol with a carbonate precursor. The dihydric phenols which may be used are bisphenols, for example, bis(4-hydroxyphenyl)-methane, 2,2-bis(4-hydroxyphenyl)propane (bisphenol A), 2,2-bis(4-hydroxy-3-methylphenyl)propane, 4,4-bis(4-hydroxyphenyl)heptane, 2,2-bis(4-hydroxy-3,5-dichlorophenyl)propane, 2,2-bis(4-hydroxy-3,5-dibromophenyl)propane; dihydric phenyl ethers, for example, bis(4-hydroxyphenyl)ether, bis(3,5-dichloro-4-hydroxyphenyl)ether; dihydroxydiphenyls, for example, p,p'-dihydroxydiphenyl, 3,3'-dichloro-4,4'-dihydroxydiphenyl; dihydroxyarylsulphones, for example, bis(4-hydroxyphenyl)-sulphone, bis(3,5-dimethyl-4-hydroxyphenyl)sulphone; dihydroxy benzenes, resorcinol, hydroquinone; halogen- and alkyl-substituted dihydroxybenzenes, for example, 1,4-dihydroxy-2,5-dichlorobenzene, 1,4-dihydroxy-3-methyl benzene and dihydroxy diphenylsulphoxides, for example, bis(4-hydroxyphenyl) sulphonoxide, bis(3,5-dibromo-4-hydroxyphenyl)sulphoxide. A variety of other dihydric phenols may also be used for the preparation of the carbonate polymers. These are stated, for example, in United States Patent Specifications 2,999,835; 3,028,365 and 3,153,008. Also suitable for the preparation of the aromatic carbonate polymers are copolymers, prepared from one of the above-mentioned dihydric phenols copolymerized with halogen-containing dihydric phenols, for example, 2,2-bis(3,5-dichloro-4-hydroxyphenyl)propane, and 2,2-bis(3,5-dibromo-4-hydroxyphenyl)propane. It is, of course, possible to use two or more different dihydric phenols or a copolymer of a dihydric phenol with a glycol or with a polyester with hydroxyl or acid terminal groups, or with a dibasic acid in the case a copolymer and not a homopolymer is desired for use in the preparation of the aromatic carbonate polymers according to the invention. Mixtures of the above-mentioned substances may also be used for the preparation of the aromatic polycarbonate resin.

The carbonate precursor may be a carbonylhalide, a carbonate ester or a halogen formate. The carbonylhalides which may be used are carbonylbromide, carbonylchloride and mixtures thereof. Typical carbonate esters which may be used are diphenylcarbonate, di(halogenphenyl)carbonates, for example, di-(chlorophenyl)carbonate, di-(bromophenyl)carbonate, di-(trichlorophenyl)carbonate, di-(tribromophenyl)carbonate; di-(alkylphenyl)carbonates, for example, di-(tolyl)carbonate; di-(napthyl)carbonate, di-(chloronapthyl)carbonate or mixtures thereof. The halogen formates which may be used are bis-halogen formates of dihydric phenols (for example bischloroformates of hydroquinone) or of glycols (for example bis-halogenformates of ethylene glycol, neopentyl glycol and polyethylene glycol). Other carbonate precursors are known to those skilled in the art. Carbonyl chloride (phosgene) is preferred.

The polymeric products of a polyhydric phenol, a dicarboxylic acid and carbonic acid are also suitable. They are described in United States Patent 3,169,121.

The aromatic carbonate polymers according to the invention can be prepared while using a molecular weight regulator, an acid acceptor and a catalyst. The molecular weight regulators which may be used comprise phenol, cyclohexanol, methanol, para-t-butylphenol, and parabromophenol. Para-t-butylphenol is preferably used as a molecular weight regulator.

A suitable acid acceptor may be an organic or an inorganic acid acceptor. A suitable organic acid acceptor is a tertiary amine, for example, pyridine, triethyl amine, dimethyl aniline and tributyl amine. The inorganic acid acceptor may be hydroxide, a carbonate, a bicarbonate or a phosphate of an alkali metal ion or an alkaline earth metal ion.

Other substances may also be mixed with the aromatic carbonate polymer, for example, mold-releasing agents, reinforcing fillers and impact modifiers. Impact modifiers effective for increasing the impact resistance, particularly thick section impact resistance of polycarbonates include polyolefins and rubbery type polymers. Examples of polyolefins include polyethylene, polypropylene and polymers derived from higher olefins. Examples of rubbery type polymers are acrylate based polymers such as n-butyl acrylate and Acryloid KM330® from Rohm and Haas, a core-shell interpolymer having an n-butyl acrylate core and a methyl methacrylate shell as well as small quantities of cross-linking agent and graft linking agent. Butadiene based rubbers are further examples of rubbery type polymers.

The carbon black for the polycarbonate compositions according to the invention may be any carbon black which is used in the synthetic resin industry for making synthetic resins electrically conductive; see, for example, Kirk Othmer, Encyclopedia of Chemical Technology, third edition, Vol. 18, pp. 784—788.

Phosphites of formula 1a and 1b which can be employed are the typical phosphites useful for thermally stabilizing aromatic polycarbonate, see Fritz, U.S.P. 3,305,520 incorporated by reference.

Particularly suitable phosphites are the phosphites of formula 1a in which the groups $R_1$ which may be the same or different, each represent hydrogen, an alkyl group (preferably of one to ten carbon atoms, inclusive), an aryl group (preferably phenyl) or alkaryl group (preferably alkyl and aryl as previously preferably defined), or two of the groups $R_1$, together represent a ring structure. Di or trisubstituted phosphites are preferred.

Examples of such phosphites are (di-decyl) phenyl phosphite, tris(nonylphenyl)phosphite and tris(di-t-butylphenyl)phosphite.

Examples of phosphites in which two of the groups $R_1$ represent a ring structure are the phosphites of formula 1b, in which $R_1$ has the above-given meanings.

It is surprising that by the incorporation of phosphite in the above-mentioned quantities the stability of carbon black-containing polycarbonate compositions is improved. In fact, phosphites in the quantities used according to the invention, when no carbon black is present, reduce the stability of polycarbonates without carbon black, as appears from Table A.

TABLE A

Stability of polycarbonate without carbon black in the presence of tris(nonylphenyl)phosphite (TNPP)

| Sample | TNPP | MV7' (1) (Pa · s) | MV40' (2) (Pa · s) | MIS (3) % |
|---|---|---|---|---|
| 1 | — | 561 | 532 | 5,2 |
| 2 | 0.1% | 542 | 524 | 3.4 |
| 3 | 0.3% | 470 | 440 | 6.2 |
| 4 | 0.6% | 317 | 255 | 19.5 |
| 5 | 1.0% | 240 | 156 | 35.1 |

(1) Melt viscosity measured on Göttfert Rheograph 2000 at 300°C/1500 $sec^{-1}$; residence time 7 minutes.
(2) Melt viscosity measured on Göttfert Rheograph 2000 at 300°C/1500 $sec^{-1}$; residence time 40 minutes.
(3) Melt instability: $[(1)-(2)/(1)]\times 100\%$.

The effect of incorporating phosphite on the stability of a carbon black-containing polycarbonate composition is shown in Figure 1 and the Tables B and C which will be explained in detail in the Examples and below.

In Figure 1, the molecular weight of previously dried polycarbonate with 18% carbon black extruded at 260°C and 90 rpm from a Leistritz single-blade extruder is plotted on the vertical axis; the weight percentage of di-decyl-phenylphosphite incorporated in the polycarbonate is plotted on the horizontal axis. The molecular weight of polycarbonate without carbon black and di-decyl-phenylphosphite extruded in the same manner is 21,900. From this Figure it appears that the molecular weight is higher, so less degradation has occurred as more di-decylphenylphosphite is incorporated in the polycarbonate. The same effect appears from the Tables B and C which relates to an extrudate of the same device, but now at 240°C, in which tris(nonylphenyl)-phosphite and tris(2,4-di-t-butylphenyl)phosphite have been tested instead of di-decyl-phenylphosphite, which phosphites have been found to also improve the stability of the carbon black-containing polycarbonate. Also present in the composition is an ester plasticizer which alone or with the phosphite retards degradation of the polycarbonate.

The phosphite may be added to the mixture of polycarbonate and carbon black prior to the extrusion, or the carbon black may be treated with the phosphite before being mixed with the polycarbonate.

TABLE B

Composition and properties of polycarbonate (mol. weight approx. 22,000)/carbon black mixtures in the presence of phosphites

| Sample | Composition (parts by weight) | | | | | | Properties after extrusion | | |
|---|---|---|---|---|---|---|---|---|---|
| | Polycarbonate | Carbon black | PETB[1] | TNPP[2] | DDPP[3] | TDTBPP[4] | Mw[5] | Mw decomp.(%) | Surface resistance (Ω/square) |
| 6 | 100 | — | — | — | — | — | 21,900 | 0 | $>10^{16}$ |
| 7 | 82 | 18 | — | — | — | — | 14,500 | 33.8 | 75 |
| 8 | 76 | 18 | 6 | — | — | — | 15,600 | 28.8 | <50 |
| 9 | 75.6 | 18 | 6 | 0.4 | — | — | 17,500 | 20.1 | <50 |
| 10 | 75.6 | 18 | 6 | — | — | 0.4 | 16,000 | 26.9 | <50 |
| 11 | 75.6 | 18 | 6 | — | 0.4 | — | 18,300 | 16.4 | <50 |
| 12 | 75.8 | 18 | 6 | — | 0.2 | — | 16,700 | 23.7 | <50 |
| 13 | 75.0 | 18 | 6 | — | 1.0 | — | 19,900 | 9.1 | <50 |

(1) penta-erythritol tetrabenzoate
(2) tris(nonylphenyl)phosphite
(3) di-decyl-phenylphosphite
(4) tris(2,4-di-tert · butylphenyl)phosphite
(5) weight averaged molecular weight measured by means of Gel Permeation Chromatography in chloroform.

Processing of polycarbonate masses at 240°C on extruder.

TABLE C

Composition and properties of polycarbonate (mol. weight approx. 27,500)/carbon black mixtures in the presence or absence of di-decyl-phenyl phosphite

| Sample | Composition (parts by weight) | | | | Properties | | |
|---|---|---|---|---|---|---|---|
| | Polycarbonate | Carbon black | PETB | DDPP | Mw | Mw decomp.(%) | Surface resistance (Ω/square) |
| 14 | 100 | — | — | — | 27,200 | 0 | $>10^{16}$ |
| 15 | 76 | 18 | 6 | — | 16,600 | 39.0 | <50 |
| 16 | 75 | 18 | 6 | 1 | 25,100 | 8.4 | <50 |
| 19 | 91 | 7 | 2 | 0,3 | 26,000 | 4.4 | $5\times10^7$ |

N.B.: For the abbreviation used see footnotes sub Table B.

Examples of polysiloxanes (e) which can be incorporated in the polycarbonate compositions according to the invention are the compounds of Formula 2 of claim 6, in which the groups $R_2$ which may be equal or different, represent hydrogen or an alkyl (preferably one to six carbon atoms, inclusive) or aryl group (preferably phenyl) and n+m=5—200.

A particularly suitable polysiloxane is polymethylhydrogen siloxane.

The effect of polymethylhydrogensiloxane on the stability of the polycarbonate composition will be explained in Table D below (see also the Examples).

The polysiloxane (e) can be incorporated into the polycarbonate compositions in a quantity of 0.3 to 5 weight percent of a+b+c, weight percent of e is calculated as e/a+b+c×100.

TABLE D

Effect of polymethylhydrogensiloxane on stability and processability of polycarbonate (mol. weight approx. 22,000)/carbon black mixtures

| Sample | Composition (parts by weight) | | | | | Extrusion | Properties | | |
|---|---|---|---|---|---|---|---|---|---|
| | Polycarbonate | Carbon black | PETB | MHSF[1] | TNPP | N kw/kg[2] | Mw | Mw decomp. | Surface resistance (Ω/square) |
| 6 | 100 | — | — | — | — | — | 21,900 | 0 | $>10^{16}$ |
| 8 | 76 | 18 | 6 | — | — | 0.45 | 15,600 | 28.8 | <50 |
| 9 | 75.6 | 18 | 6 | — | 0.4 | — | 17,500 | 20,1 | <50 |
| 18 | 74.6 | 18 | 6 | 1 | 0.4 | — | 19,300 | 11.4 | <50 |
| 17 | 75 | 18 | 6 | 1 | — | 0.18 | 18,500 | 16.3 | <50 |

(1) polymethylhydrogensiloxane
(2) specific taken-up energy in kilowatt per kg
For the other abbreviations see footnotes sub Table B

Examples of plasticizer which can be incorporated in the polycarbonate compositions according to the invention are recorded in United States Patents 3,186,961 and 4,082,715.

A particularly suitable plasticizer is pentaerythritol tetrabenzoate. Additional plasticizers which can be employed are other carboxylic acid esters and polymers such as poly-epsilon-caprolactone.

The improvement of the conductivity of the carbon black-containing polycarbonate compositions by plasticizer is explained in Figure 2 (see also the Examples), in which the volume resistivity (in Ωcm is plotted on the vertical axis and the weight percentage of pentaerythritol tetrabenzoate in the polycarbonate mass is plotted on the horizontal axis. The lines (a), (b), (c), (d) show the variation of the volume resistivity in dependence on the percentage of pentaarythritol tetrabenzoate of a polycarbonate composition with 5; 7.5; 10 and 12.5% by weight of carbon black, respectively.

The invention will be described in greater detail in the Examples below.

Example I (for comparison)

This Example describes the preparation of polycarbonate carbon black compositions having permanent conductivity. Bisphehol A polycarbonate is prepared by reaction of 2,2-bis(4-hydroxyphenyl)propane (bisphenol A) with phosgene in substantially equimolar quantities.

The reaction is carried out in an organic medium in the presence of triethylamine and sodium hydroxide. The molecular weight of the bisphanol A polycarbonate is controlled by means of the quantity of phenol which serves as a chain stopper. The polymer is isolated by evaporation of the organic solvent.

The resulting powder with molecular weight of approximately 22,000 is mixed with 18 parts of carbon black in a Papanmeyer high-speed mixer (sample 7, Table B). (In this Example and all following Examples, carbon black is used having an inner surface area of 900 $m^2$ per gram (determined according to the BET-method).) The mixture thus obtained is supplied to an extruder which is set at a temperature of 240°C. A 2 mm thick plate is then compressed from the extrudate. The sheet resistance of the resulting plates is measured. The decrease of the molecular weight after extrusion is also determined while using gel permeation chromatography. The results are recorded in Table B.

Example II (for comparison)

6 Parts of penta-erythritol tetrabenzoate (PETB) are added to the polycarbonate/carbon black mixture of Example I (sample 8, Table B). The mixture is processed and tested in the same manner as described in Example I.

Example III

Phosphites are added to the polycarbonate/carbon black/PETB mixture of Example II as is indicated in Table B, samples 9—13. The mixtures are processed and tested in the same manner as described in Example I.

Example IV (for comparison)

Bisphenol-A polycarbonate powder having molecular weight 21,500 is mixed with 18 parts of carbon black and 6 parts of penta-erythritol tetrabenzoate (sample 15, Table C). The mixture is processed and tested in the same manner as described in Example I.

Example V

1 Part of di-decyl-phenyl-phosphite is added to the polycarbonate/carbon black/PETB mixture of Example IV (sample 16, Table C). The mixture is processed and tested in the same manner as described in Example I.

Example VI

1 Part of polymethylhydrogensiloxane is added to the polycarbonate/carbon black/PETB mixture of Example II (sample 17, Table D). The specific taken-up energy of the extruder decreases as indicated in Table D, as a result of which the processing is considerably facilitated. The mixture is processed and tested in the same manner as described in Example I.

Example VII

0.4 Part of tris(nonylphenyl)phosphite is added to the polycarbonate/carbon black/PETB polymethylhydrogensiloxane mixture of Example VI (Sample 18, Table D). The mixture is processed and tested in the same manner as described in Example I.

The degradation reducing effect of the phosphite, plasticizer and polysiloxane is clear from the results.

Example VIII

This example describes the preparation of polycarbonate carbon black mixtures exhibiting permanent anti-static properties. To the polycarbonate powder as prepared in example I with a weight average molecular weight of 27,200 are added:

7 parts of carbon black
2 parts of pentaerythitol-tetrabenzoate and
0.3 parts of di decyl-phenylphosphite (Sample 19, Table C).

The mixture is processed in the way as described in Example I. Molecular weight breakdown and surface resistivity (measured according to DIN 53 482) are given in Table C.

**Claims**

1. A polycarbonate composition comprising
a. 2 to 30 weight percent of carbon black,
b. 0,3 to 3 weight percent of a phosphite stabilizer of formula 1a

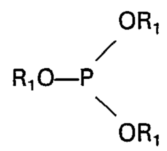

1a

in which the groups $R_1$, which may be the same or different, each represent hydrogen, an alkyl group, an aryl group or alkaryl group or two or the groups $R_1$ together represent a ring structure, preferably of formula 1b

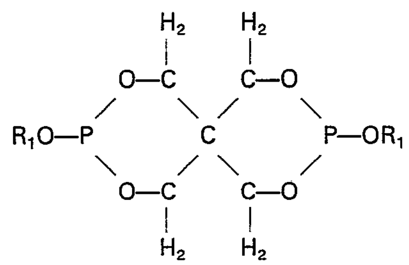

1b

in which $R_1$ has the above given meanings, and

c. 67 to 97.7 weight percent of an aromatic polycarbonate, each of the quantities of a, b and c calculated as the weight percent of the total of a+b+c.

2. A composition in accordance with claim 1 wherein further included are polycarbonate degradation inhibiting quantities of a plasticizer or a polysiloxane.

3. A composition in accordance with claim 2 wherein the plasticizer is from 0.5—20 weight percent of a+b+c.

4. A composition in accordance with claim 2 wherein the polysiloxane is from 0.3 to 5 weight percent of a+b+c.

5. A composition in accordance with claim 4 wherein the plasticizer is from 0.5 to 20 weight percent of a+b+c and the polysiloxane is from 0.3 to 5 weight percent of a+b+c.

6. A composition in accordance with claim 4 wherein the polysiloxane is of the formula 2

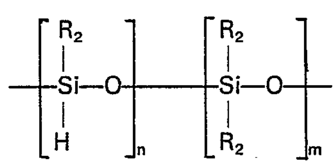

2

wherein each $R_2$ is the same or different and is hydrogen, alkyl or aryl and n+m is 5—200.

**Patentansprüche**

1. Polycarbonat-Zusammensetzung enthaltend
(a) 2 bis 30 Gew.-% Ruß,
(b) 0,3 bis 3 Gew.-% eines Phosphitstabilisators der Formel 1a

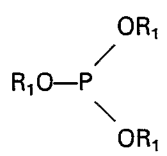

1a

in der die Gruppen $R_1$, die gleich oder unterschiedlich sein können, jeweils Wasserstoff, eine Alkylgruppe, eine Arylgruppe oder Alkarylgruppe oder aber zwei der Gruppen $R_1$ zusammen eine Ringstruktur vorzugsweise der Formel 1b

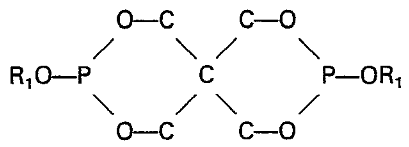

1b

darstellen, worin $R_1$ die vorstehend aufgeführte Bedeutung hat und

(c) 67 bis 97,7 Gew.-% eines aromatischen Polycarbonats, wobei jede der Mengen (a), (b) und (c) als Gew.-% der Summe von (a)+(b)+(c) berechnet sind.

2. Zusammensetzung nach Anspruch 1, worin weiterhin den Abbau von Polycarbonat verhindernde Mengen eines Weichmachers oder eines Polysiloxans enthalten sind.

3. Zusammensetzung nach Anspruch 2, worin der Weichmacher in einer Menge von 0,5 bis 20 Gew.-% von (a)+(b)+(c) enthalten ist.

4. Zusammensetzung nach Anspruch 2, worin das Polysiloxan in einer Menge von 0,3 bis 5 Gew.-% von (a)+(b)+(c) enthalten ist.

5. Zusammensetzung nach Anspruch 4, worin der Weichmacher in einer Menge von 0,5 bis 20 Gew.-% von (a)+(b)+(c) und das Polysiloxan in einer Menge von 0,3 bis 5 Gew.-% von (a)+(b)+(c) enthalten ist.

6. Zusammensetzung nach Anspruch 4 worin das Polysiloxan die nachfolgende Formel 2

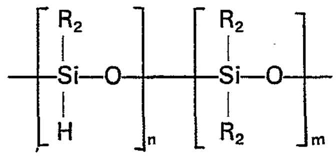

2

aufweist, worin jede oder $R_2$-Gruppen gleich oder unterschiedlich sind und Wasserstoff, Alkyl oder Aryl darstellen und n+m 5 bis 200 sind.

**Revendications**

1. Composition de polycarbonate comprenant:

a. de 2 à 30 pourcent en poids de noir de carbone,

b. de 0,3 à 3 pourcent en poids d'une phosphite utilisée comme stabilisant répondant à la formule 1a.

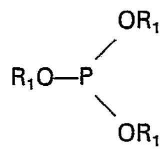

1a

dans laquelle les groupes $R_1$, qui peuvent être identiques ou différents, représentent chacun l'hydrogène, un groupe alkyle, un groupe aryle ou un groupe alkaryle ou deux des groupes $R_1$, pris ensemble, représentent une structure cyclique répondant, de préférence, à la formule 1b.

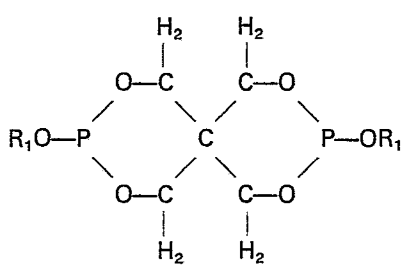

1b

dans laquelle $R_1$ est tel qu'on l'a défini plus haut, et

c. de 67 à 97,7 pourcent en poids d'un polycarbonate aromatique, chacune des quantités de (a), (b) et (c) étant calculée en pourcent en poids de l'ensemble de a+b+c.

2. Composition selon la revendication 1, caractérisée en ce qu'elle comprend encore des quantités inhibitrices de la dégradation du polycarbonate d'un plastifiant ou d'un polysiloxane.

3. Composition selon la revendication 2, caractérisé en ce que le plastifiant représente de 0,5 à 20 pourcent en poids de a+b+c.

4. Composition selon la revendication 2, caractérisée en ce que le polysiloxane représente de 0,3 à 5 pourcent en poids de a+b+c.

5. Composition selon la revendication 4, caractérisée en ce que le plastifiant représente de 0,5 à 20

pourcent en poids de a+b+c et en ce que le polysiloxane représente de 0,3 à 5 pourcent en poids de a+b+c.

6. Composition selon la revendication 4, caractérisée en ce que le polysiloxane répond à la formule 2

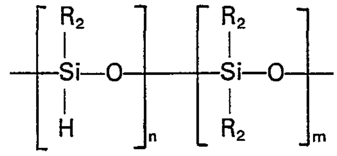

2

dans laquelle les groupes $R_2$ qui peuvent être identiques ou différents, représentent chacun l'hydrogène, un radical alkyle ou aryle et n+m est compris entre 5 et 200.

FIG. 1

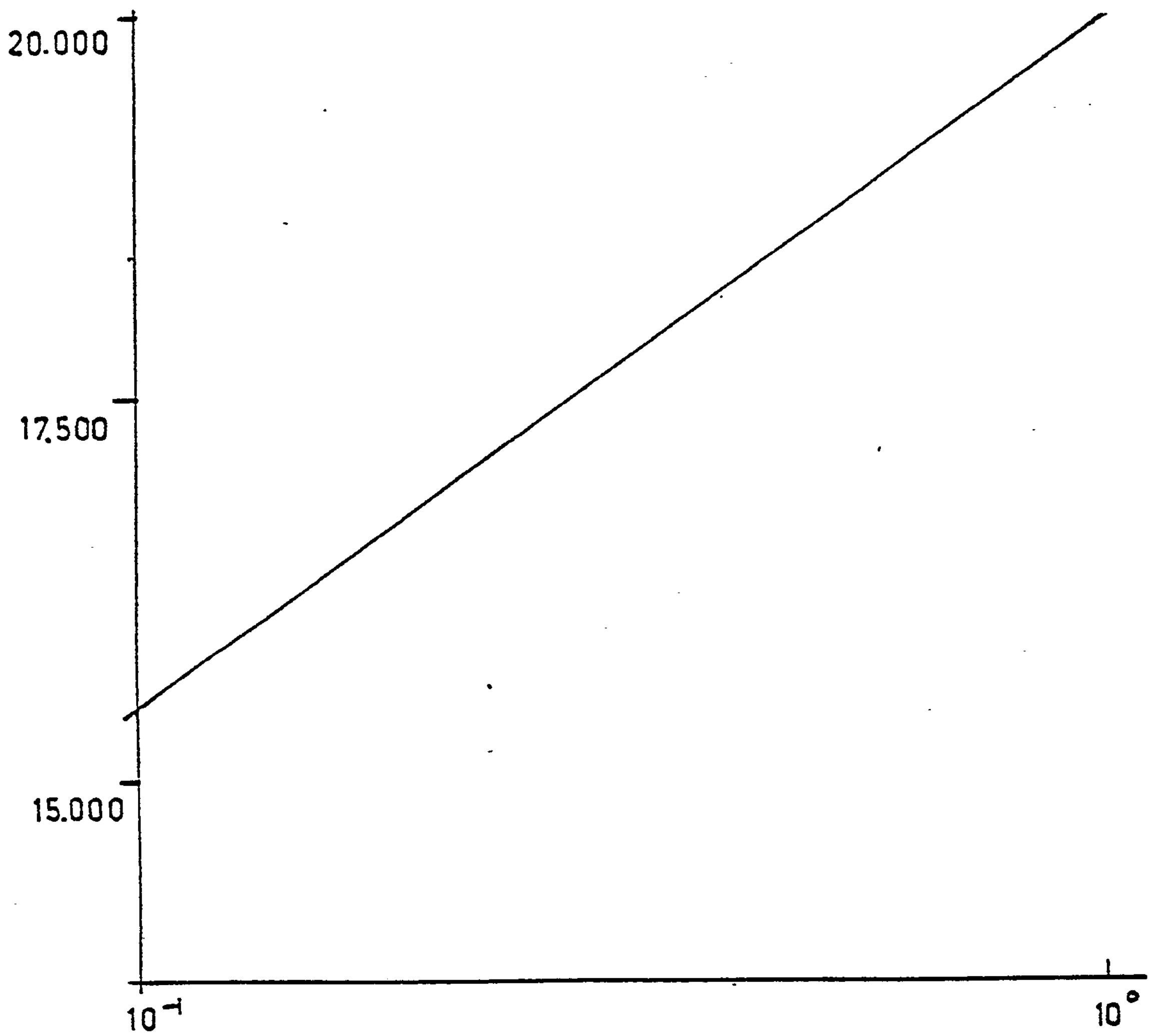

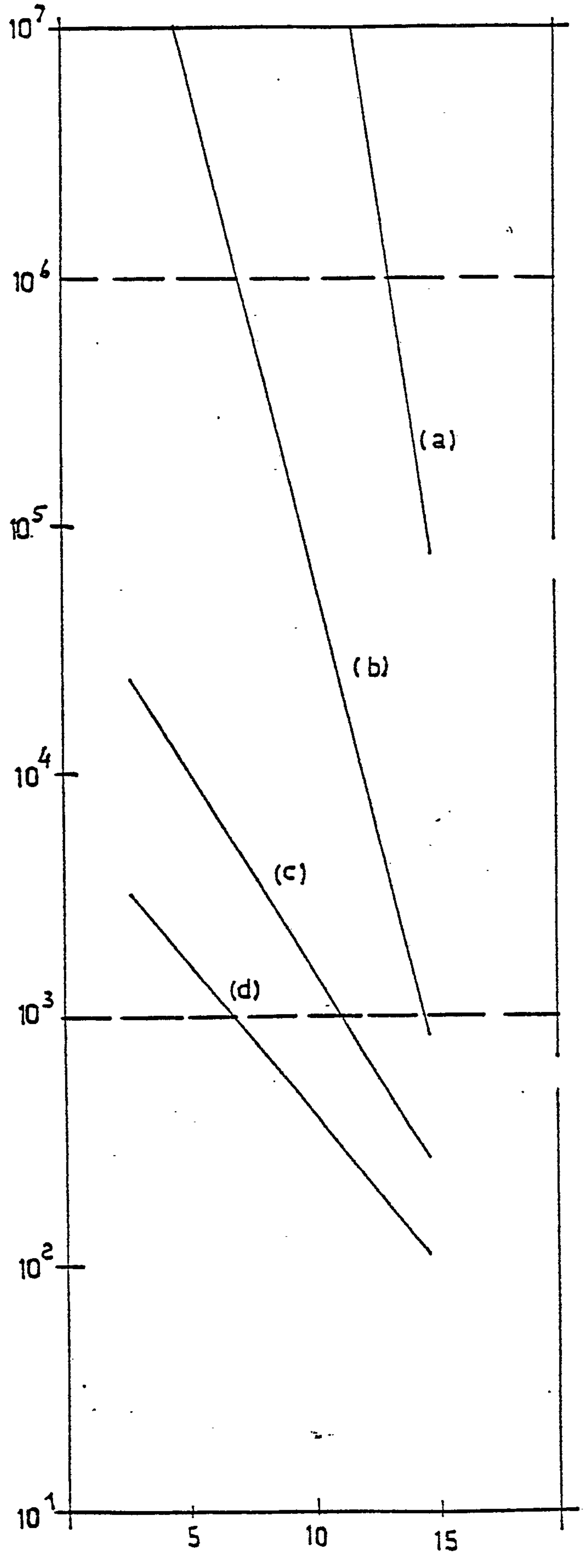


FIG. 2